# EUROPEAN PATENT SPECIFICATION

(11) **EP 0 526 181 B1**
(45) Date of publication and mention of the grant of the patent: **14.05.1997**
(21) Application number: 92306918.1
(22) Date of filing: 29.07.1992
(51) Int. Cl.: C02F 5/10, C02F 5/14

(54) **Controlling mineral deposits in cooling systems**
Vorbeugung von mineralen Ablagerungen in Kühlsystemen
Diminuation des dépôts minéraux dans les systèmes de refroidissement

(30) Priority: 29.07.1991 CA 2048059
(43) Date of publication of application: 03.02.1993
(73) Proprietor: Diversey Corporation, Mississauga, Ontario L4Z 3S9 (CA)
(72) Inventor: Coughlin, Michael F., Cobourg, Ontario K9A 4S8 (CA)
(74) Representative: Froud, Clive

(56) References cited:
- US-A- 3 666 664
- US-A- 3 804 770
- US-A- 3 806 459
- US-A- 3 959 167
- US-A- 4 708 805
- US-A- 5 023 011

## Description

This invention relates to a cooling water treating composition, and in particular to a composition for preventing scale deposition in such water.

In water cooled heat exchangers such as shell and tube process heat exchangers, carbonate salts and in particular calcium carbonate usually form the bulk of any deposits. This phenomenon is due to the inverse solubility of magnesium and calcium carbonate. The present invention is based on the discovery that a combination of a chelant such as ethylenediaminetetraacetic acid (EDTA) and a deposit control agent such as hydroxyethylene diphosphonic acid (HEDP) have a synergistic effect when used for scale prevention.

EDTA has been used for several decades, alone and in combination with other agents, for controlling scale deposition in boiler water systems. Examples of metal or boiler treatment compositions containing, inter alia, EDTA are described in United States Patents Nos. 3,806,459, issued to E.Q. Petrey on April 23, 1974; 3,959,167, issued to C.M. Hwa et al on May 25, 1976; 3,804,770, issued to W.F. Lorenc et al on April 16, 1974 and 4,442,009, issued to R.P. O'Leary et al on April 10, 1984. However, to the best of the present inventor's knowledge, prior to the present invention, EDTA had not been used for cooling water treatment. The probable reason is that conventional wisdom dictates that EDTA be used in stoichiometric amounts in order to control scale formation in boiler water. Boiler water normally contains only trace amounts of calcium and therefore is a prime candidate for the stoichiometric use of EDTA. However, cooling water contains substantially larger quantities of calcium than boiler water. Thus, stoichiometric treatment of cooling water using EDTA or any other chelant is not economically feasible.

Reference may also be made to US-A-5,023,011 which relates to a cooling water treatment system which was a formulation comprising a blend of selected phosphonates, one or more scale-modifying polymers and one or more chelants.

The object of the present invention is to provide a composition for controlling scale deposition in cooling water which does not rely on a high concentration of chelant. Accordingly, the present invention relates to a cooling water treatment composition comprising a synergistic mixture of a deposit control agent and ethylenediaminetetraacetic acid. Preferably, the deposit control agent is selected from the group consisting of hydroxyethylene diphosphonic acid and phosphonobutane-1,2,3-tricarboxylic acid.

The present invention provides a method of inhibiting scale deposition in cooling water having substantially larger quantities of calcium when compared to trace amounts of calcium in boiler water comprising adding a mixture consisting of a phosphonate deposit control agent and a chelant to the cooling water, the said mixture being added to the said cooling water in an amount to provide a relatively small quantity of chelant compared to stoichiometric quantity of chelant to treat boiler water, characterised in that the said mixture is defined within a ratio of phosphonate deposit control agent: chelant in the range of from approximately 1.8:1 to 4.5:1, the said relatively small quantity of chelant in the cooling water is in the range of from 1 to 5 ppm and the quantity of phosphonate in the cooling water is in the range of from 3.75 to 9 ppm.

In order to establish the efficacy of the invention, experiments were conducted in a pilot cooling system designed to simulate a typical process system. In a system of this type, the heat transfer resistance (HTR, which is measured in hours ft⁻² °F/BTU or its metric equivalent of M².°C/watt) of the water coolant is a directly proportional measurement of fouling of a heat transfer surface. Therefore, monitoring the HTR provides a measurement of the scale forming properties of untreated and treated water.

In the system used by the inventor, critical operating parameters such as heat flux, water temperature, pH, conductivity and dissolved solids which are known to affect HTR were monitored and controlled during the course of each experiment. The cooling water was Lake Ontario water previously treated with alum and chlorine by the municipality of Cobourg, Ontario, Canada. The system had a volume of 60L and included an induced draft, cross flow cooling tower, a primary heat source (heating coils immersed in demineralized water to indirectly heat the open recirculating water via a shell and tube heat exchanger) and a secondary heat source in the form of an electrically heated coil clamped around a stainless steel tube.

The secondary heat source tube was equipped with thermocouples for determining the temperature of water entering and leaving the tube, and the temperature of the heating coil. The temperatures were monitored using a microprocessor which calculated the HTR of the section of tube in direct contact with the heating coil. The heat flux of the secondary heat source (29,334.2 BTU/hr ft² or its metric equivalent of 1.6662 x 10⁷ watts M².°C) was selected because it produces a water side skin temperature on a deposit free stainless steel tube of about 140°F (60°C). This temperature not only simulates a typical process heat exchanger but is also sufficiently hot to induce scale formation in untreated water. Since the temperature readings sensed by the thermocouples on the stainless steel tube are affected by water velocity and the temperature of the open recirculating water entering the tube, these two parameters were controlled and kept constant at 2.5 ft/sec (0.762 m/sec) and 100°F (37.8°C), respectively.

Once the cooling system was filled with water, it was either charged with a composition to a concentration of 150 ppm or left untreated. The water was then allowed to circulate without intervention until the desired cycles of concentration were attained. Cycles of concentration (C.O.C.) is a term used to express the number of times the dissolved solids (usually inorganic constituents) are permitted to concentrate due to evaporation. The C.O.C. is calculated by determining the ratio of conductivity of open recirculating water/conductivity of make-up water. The C.O.C. was maintained using a conductivity controller. Once the desired C.O.C. was attained (generally 4.0 C.O.C.) the system was deemed to be in equilibrium. At that point, additional chemical treatment composition was added in proportion to the make-up to maintain the initial concentration of 150 ppm of treatment composition.

Formation of deposits on the stainless steel tube was allowed to progress naturally or was induced by "stressing" the open recirculating water by adding sufficient 5% NAOH to increase and maintain the open recirculating by 0.3 pH units once equilibrium was attained. In either situation, the experiment was typically allowed to run for another 96 hours before termination. Therefore, the total standard run time for an experiment was 120 hours. However, if the HTR increased beyond 5 x 10⁻⁴ hr ft⁻² °F/BTU (2.84 x 10⁻³ M².°C/watt), the stainless steel tube was deemed to be heavily fouled and the experiment terminated prior to the usual 120 hour run time.

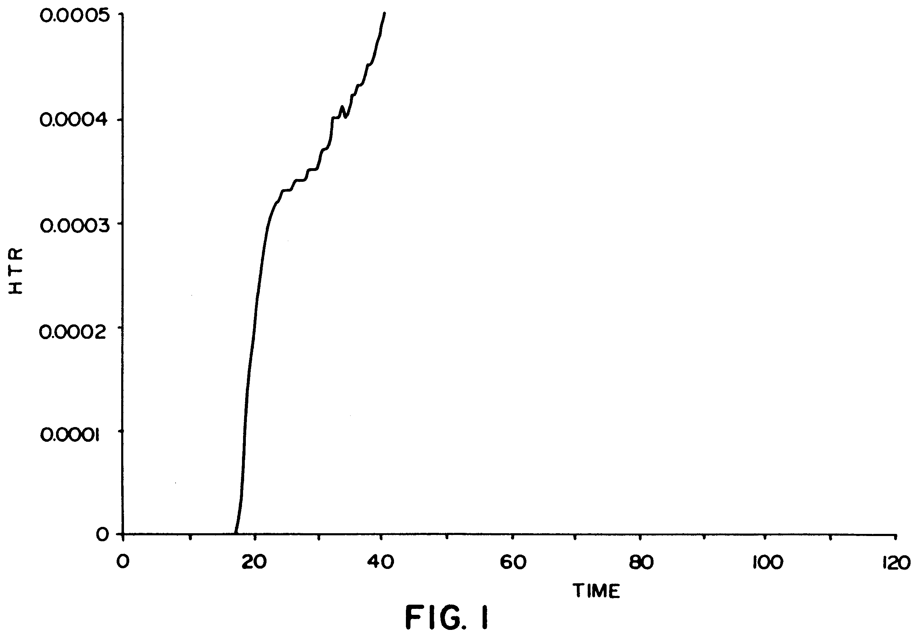

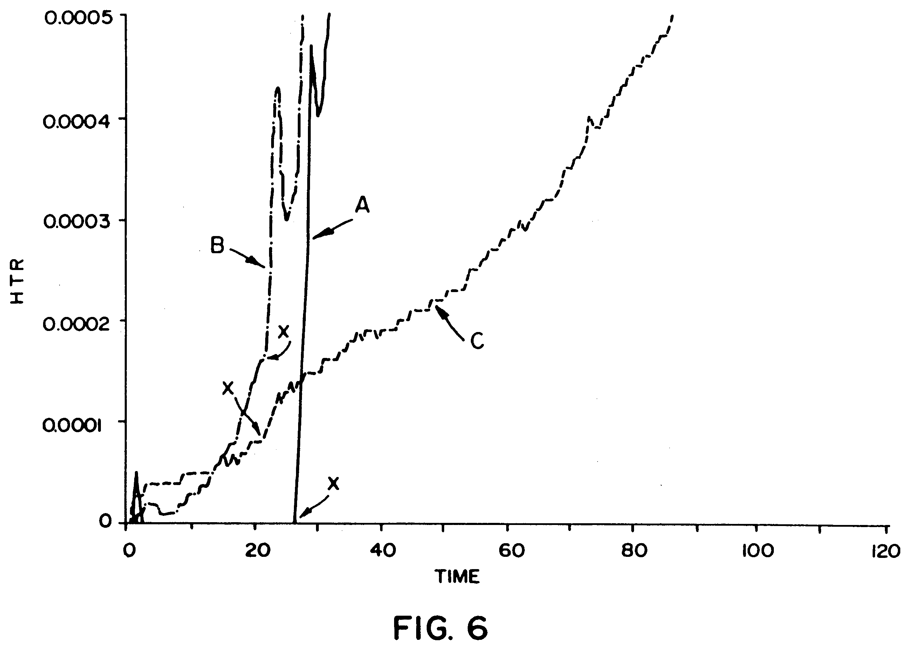

The results of a plurality of experiments will be described with reference to the accompanying drawings, wherein all of Figs. 1 to 11 are graphs of HTR versus time in hours for untreated water and water with a variety of additives therein.

### EXPERIMENT 1

The graph of Fig. 1 represents the change in HTR with time for untreated water. As expected, the tube quickly became fouled, even before equilibrium was attained.

### EXPERIMENT 2

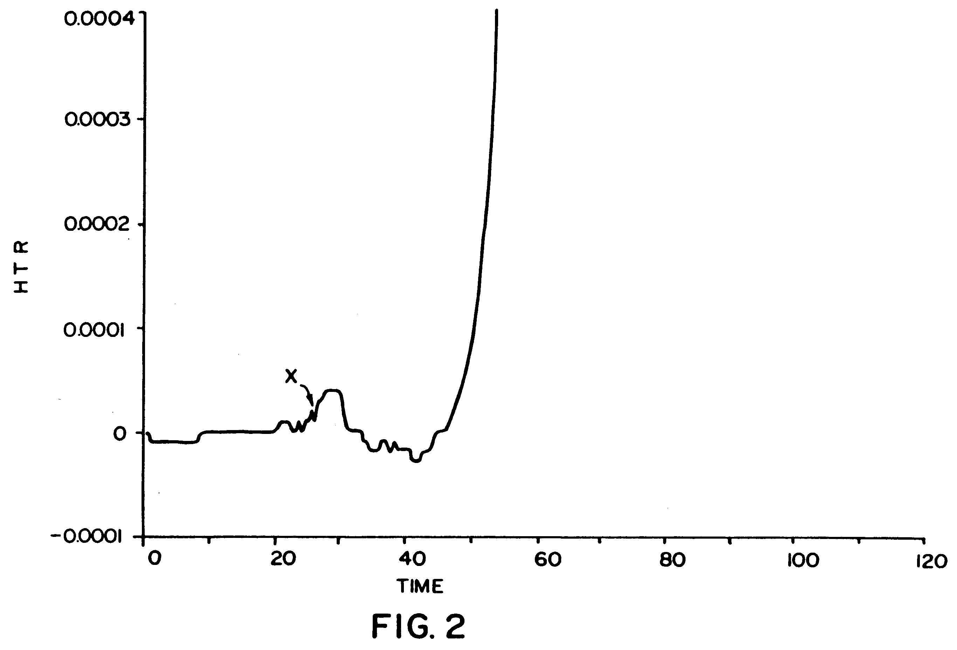

In a second experiment (Fig.2), 150 ppm of 5% Dequest 2010 (trade-mark), i.e. 5% of 150 ppm or 7.5 ppm as Dequest 2010 was added to the water. Since Dequest 2010 is 60% hydroxyethylene diphosphonic acid (HEDP) and the balance water, the amount of active HEDP maintained in this experiment was 4.5 ppm. Despite stressing of the system by the addition of alkali at point x after system equilibrium was attained (approximately 24 hours), the HTR fluctuated around zero for another 24 hours, after which the stainless steel tube quickly became fouled.

### EXPERIMENT 3

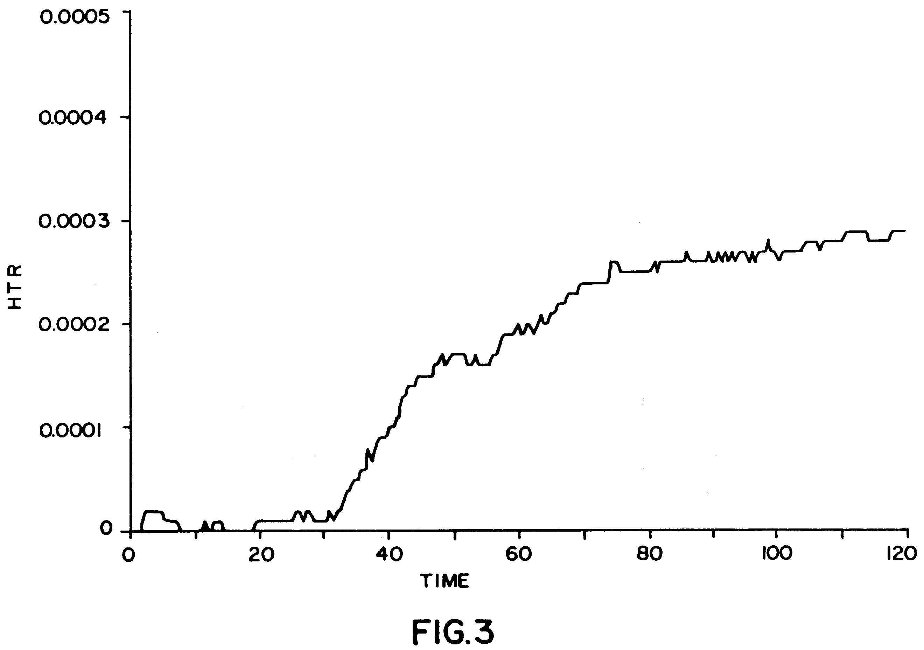

The graph of Fig. 3 makes it readily apparent that ethylenediaminetetraacetic acetic acid when used alone and in low concentration has virtually no effect on scaling. In this third experiment, EDTA was added to the water to a concentration of 1.5 ppm. Fouling occurred within approximately 32 hours.

### EXPERIMENT 4

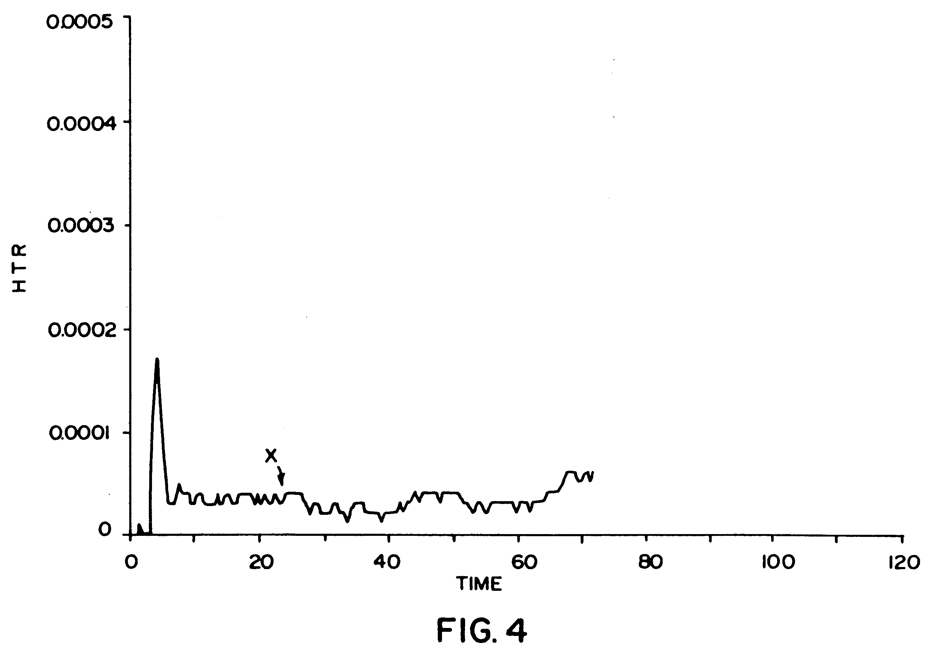

Fig. 4 of the drawings graphically illustrates the effect of supplementing the treatment concentrate with EDTA. In this experiment, 4.5 ppm HEDP and 1.5 ppm EDTA (as tetrasodium ethylenediaminetetra acetate) were added to the system. After approximately 24 hours (at point x) the system was stressed by the addition of alkali. Even after a run time of approximately 72 hours virtually no fouling had occurred. By comparing Figs. 3 and 4, it is readily apparent that the combination of HEDP and EDTA results in a major improvement in the scale inhibiting properties of the treatment composition.

### EXPERIMENT 5

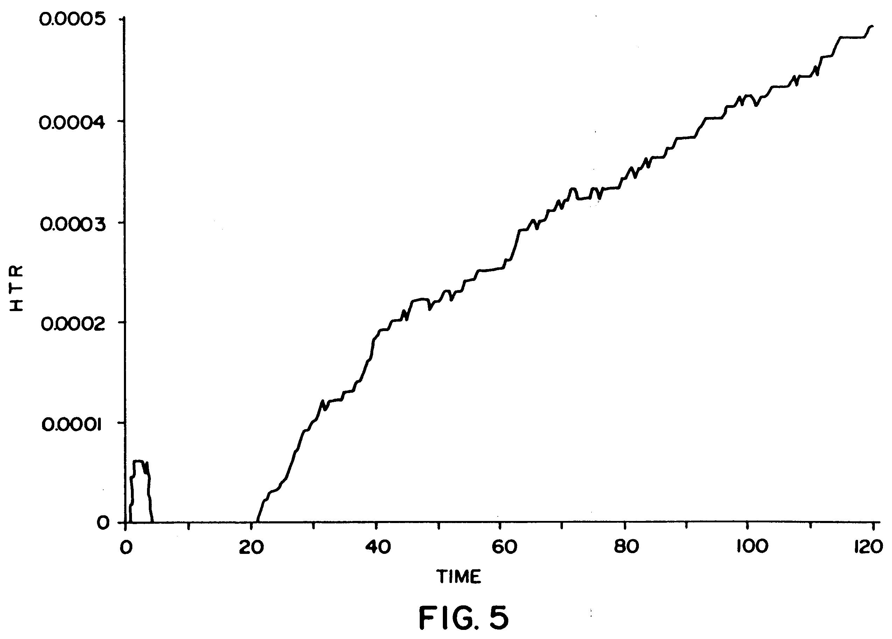

In a fifth experiment (Fig. 5), the system contained 3.75 ppm EDTA and 3.75 ppm of another chelant, namely trisodium nitrilotriacetate (NTA). The mixture reduced the scale deposition rate, but not as dramatically as the synergistic blend of EDTA and HEDP.

### EXPERIMENTS 6, 7 AND 8

In three additional experiments, the concentrations of HEDP and EDTA were varied to determine the optimum HEDP concentration. In each case, the system was stressed by the addition of alkali at point x after equilibrium had been reached. In experiment 6 (solid line A) the concentration of the additives was 0.9 ppm HEDP and 5.0 ppm EDTA, in experiment 7 (stippled line B) the concentration was 9.0 ppm HEDP and 1.0 ppm EDTA, and in experiment 8 (dashed line C) the concentration was 9.0 ppm HEDP and 2.5 ppm EDTA. These experiments clearly established that the ratio of HEDP to EDTA is important. In general, it appears that the optimum amount of HEDP is between 1 and 10 ppm. In more precise terms, the best performance was obtained when the HEDP chelant ratio was 4.5/1.0 ppm.

### EXPERIMENTS 9, 10 and 11

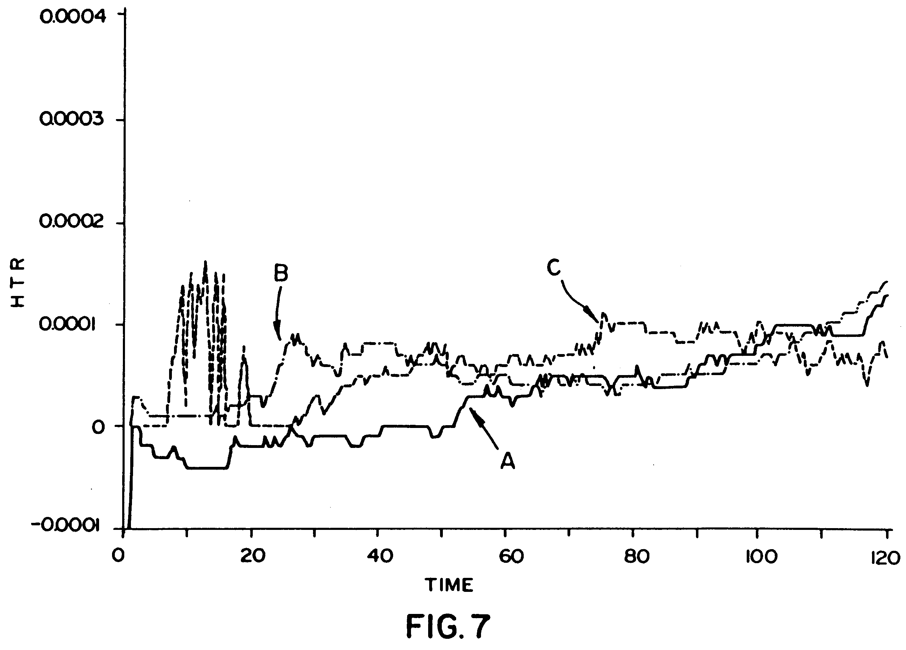

These experiments demonstrate that in the absence of stressing with NAOH, the scale inhibiting properties of the HEDP:EDTA synergistic blend improved as the concentration of EDTA increased. In each case, the concentration of HEDP was maintained at the previously identified optimum concentration of 4.5 ppm. The concentration of EDTA was 1.0 ppm in experiment 9 (solid line A in Fig. 7), 2.5 ppm in experiment 10 (stippled line B), and 5.0 ppm in experiment 11 (dashed line C).

### EXPERIMENTS 12 AND 13

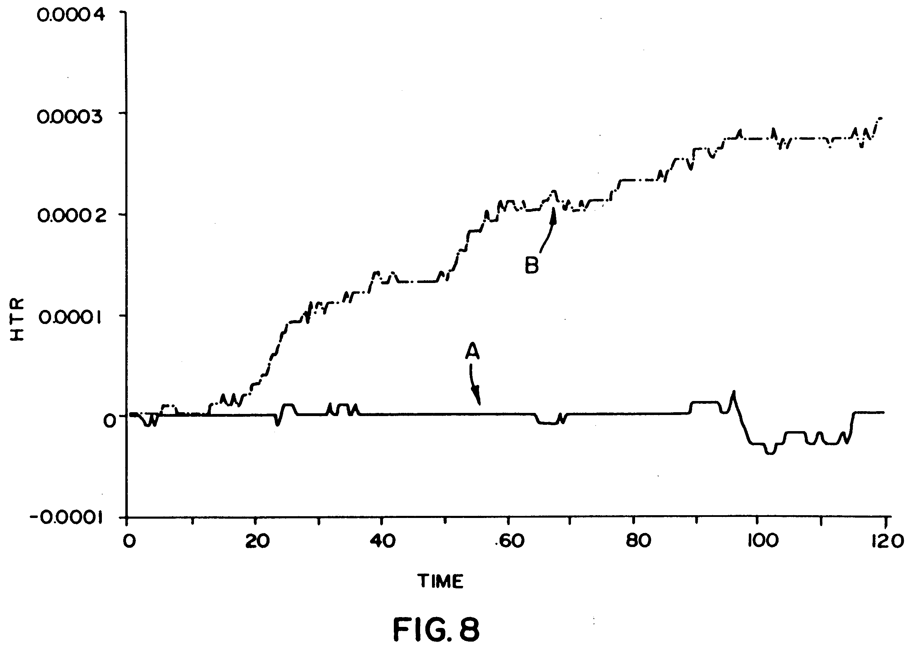

The ability of EDTA to react synergistically with known deposit control agents is again illustrated by comparing the results of the graphs of Fig. 8. In experiments 12 and 13, the deposit control agent was 3.75 ppm 2-phosphonobutane-1,2,3-tricarboxylic acid (PBTC). This compound is being used with increasing frequency, because it contributes less phosphorus to the cooling water than HEDP. Phosphorus is undesirable because it contributes to the eutrophication of water receiving the cooling water. In experiment 12 (solid line A in Fig. 8), 3.75 ppm of PBTC and 1.0 ppm EDTA were used, and in experiment 13 (stippled line B in Fig. 8), 3.75 ppm of PBTC was used. It is readily apparent that synergism occurs.

### EXPERIMENTS 14 AND 15

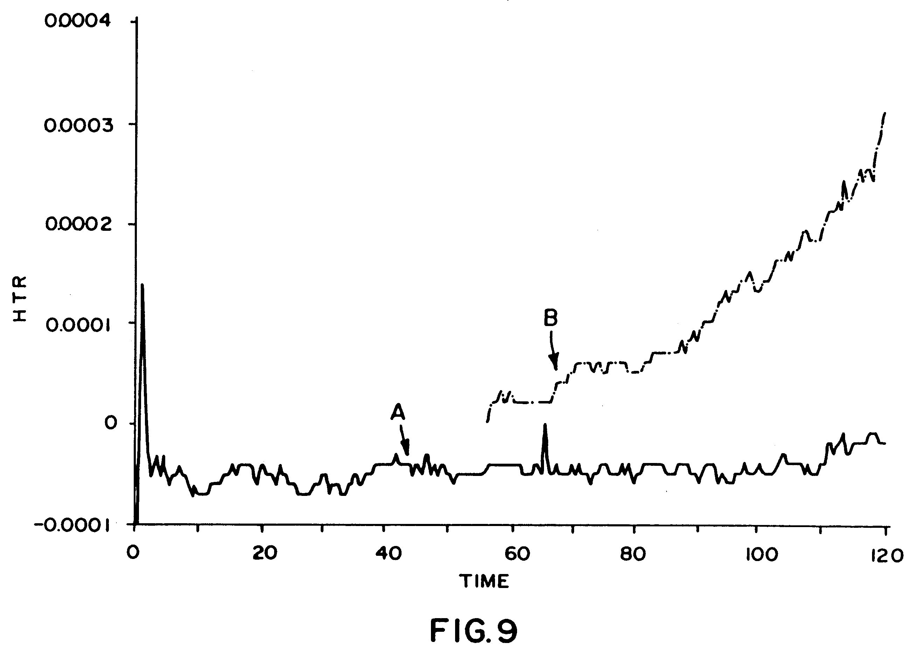

In conventional water treatment, the usual practice is to blend scale inhibitors with corrosion inhibitors. Therefore it was important to determine whether the corrosion inhibitors would interfere with the performance of the synergistic blend of HEDP and EDTA. In experiment 14 (Fig. 9), the formulated product contained 4.5 ppm HEDP, 1.0 ppm EDTA and 4.5 ppm dispersant. As shown by the solid line graph A, the blended product performed very well indeed. The result was in stark contrast to the performance of another blended formulation (stippled line B) containing 4.5 ppm HEDP and 4.5 ppm dispersant, but no EDTA.

### EXPERIMENT 16

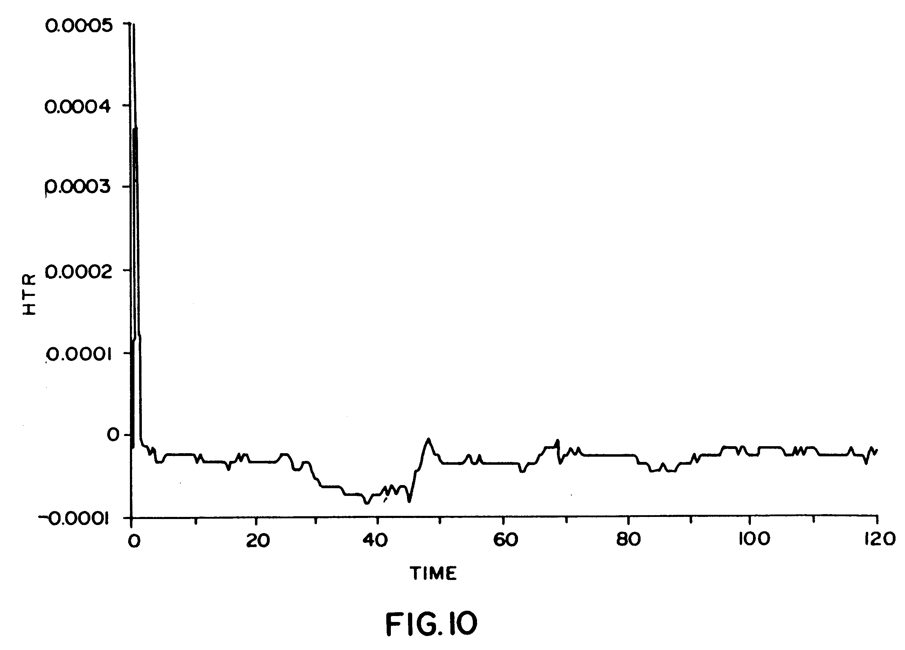

The graph of Fig. 10 illustrates that other phosponates (in this case aminotrimethylene phosphonic acids) can be used with EDTA to achieve good scale control. In this experiment the contraction of aminotrimethylene phosphonic acid (ATMP) was 3.75 ppm and that of EDTA was 1.5 ppm. ATMP is often used to control scale deposition in cooling towers, particularly in towers which are not continuously chlorinated, because ATMP is oxidized more easily than HEDP.

### EXPERIMENT 17

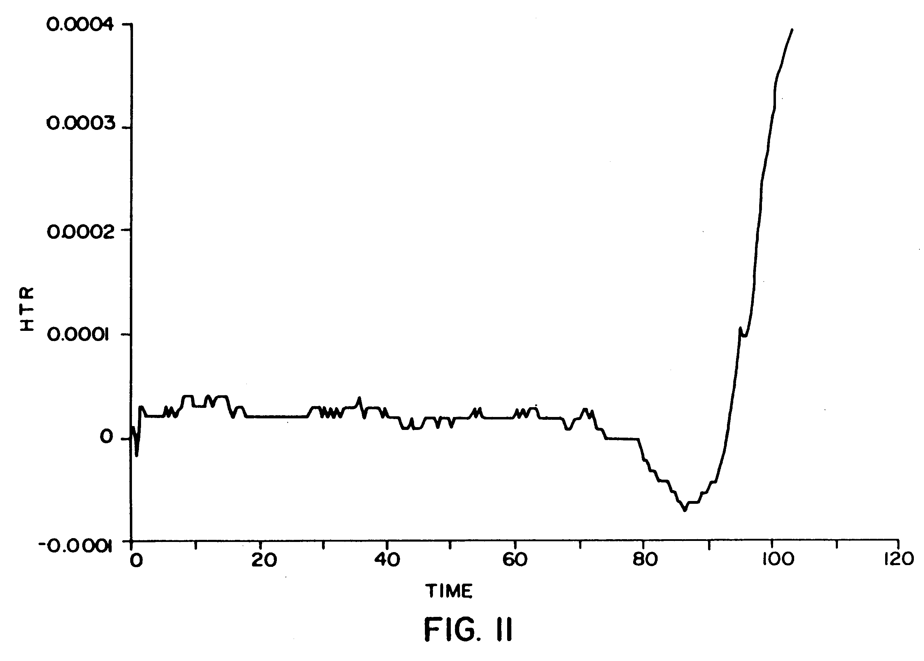

Figure 11 demonstrates that not all phosphonates display the same degree of synergism with EDTA. In this case, dimethylenetriaminepenta (methylene phosphonic acid) was used in a concentration of 3.75 ppm with 1.50 ppm of EDTA. While the mixture reduced scale deposition for several hours, fouling occurred after 90 hours. Dimethylenetriaminepenta (methylene phosphoric acid) is not normally used in cooling water treatment.

### SUMMARY

Thus, there has been provided a cooling water treatment composition containing a synergistic mixture of a deposit control agent and a relatively small quantity of EDTA which effectively reduces scale deposition even under adverse (alkaline) conditions. It is appreciated that cooling water is used in a variety of processing units, such as the aforementioned water cooled heat exchangers. Other types of units requiring cooling water include pasteurizers, retorts, exothermic reaction vessels and biological fermenters.

## Claims

1. A method of inhibiting scale deposition in cooling water having substantially larger quantities of calcium when compared to trace amounts of calcium in boiler water comprising adding a mixture consisting of a phosphonate deposit control agent and a chelant to the cooling water, the said mixture being added to the said cooling water in an amount to provide a relatively small quantity of chelant compared to stoichiometric quantity of chelant to treat boiler water, characterised in that the said mixture is defined within a ratio of phosphonate deposit control agent: chelant in the range of from 1.8:1 to 4.5:1, the said relatively small quantity of chelant in the cooling water is in the range of from 1 to 5 ppm and the quantity of phosphonate in the cooling water is in the range of from 3.75 to 9 ppm.

2. A method as claimed in claim 1 wherein the chelant is selected from ethylenediaminetetra-acetic acid and trisodium nitriolotriacetate.

3. A method as claimed in claim 1 or claim 2 wherein the deposit control agent is selected from hydroxyethylene diphosphonic acid, phosphonobutane-1,2,3-tricarboxylic acid, aminotri (methylene phosphonic acid) and dimethylenetriaminepenta (methylene phosphonic acid).

## Patentansprüche

1. Verfahren zur Vermeidung von Kesselsteinablagerungen im Kühlwasser, das beträchtlich größere Kalziummengen im Vergleich zu den Spurenmengen von Kalzium in Boilerwasser aufweist, umfassend die Zugabe einer Mischung, bestehend aus einem Phosphonat-Ablagerungsbekämpfungsmittel und einem Chelatbildner zum Kühlwasser, wobei die Mischung zum Kühlwasser in einer solchen Menge zugegeben wird, um eine relativ geringe Menge des Chelatbildners im Vergleich zur stöchiometrischen Menge des Chelatbildners zur Behandlung von Boilerwasser bereitzustellen, dadurch gekennzeichnet, daß die Mischung in einem Verhältnis von Phosphonat-Ablagerungsbekämpfungsmittel : Chelatbildner im Bereich von 1,8:1 - 4,5:1 definiert ist, wobei die relativ geringe Menge des Chelatbildners im Kühlwasser im Bereich von 1-5 ppm und die Phosphonatmenge im Kühlwasser im Bereich von 3,75-9 ppm liegt.

2. Verfahren nach Anspruch 1, wobei der Chelatbildner aus Ethylendiamintetraessigsäure und Trinatriumnitrioltriacetat ausgewählt wird.

3. Verfahren nach Anspruch 1 oder Anspruch 2, wobei das Ablagerungsbekämpfungsmittel ausgewählt wird aus Hydroxyethylendiphosphonsäure, Phosphonobutan-1,2,3-tricarbonsäure, Aminotri(methylenphosphonsäure) und Dimethylentriaminpenta(methylenphosphonsäure).

## Revendications

1. Procédé pour inhiber la formation d'un dépôt dans de l'eau de refroidissement contenant des quantités de calcium sensiblement plus importantes que les quantités en traces de calcium dans de l'eau de chaudière, consistant à ajouter à l'eau de refroidissement un mélange constitué d'un agent de contrôle des dépôts de type phosphonate et d'un chélatant, ledit mélange étant ajouté à ladite eau de refroidissement en une quantité telle que la quantité de chélatant soit relativement faible par rapport à la quantité stoechiométrique de chélatant nécessaire pour traiter de l'eau de chaudière, caractérisé en ce que ledit mélange est défini par un rapport de l'agent de contrôle des dépôts de type phosphonate au chélatant compris entre 1,8/1 et 4,5/1, ladite quantité de chélatant relativement faible dans l'eau de refroidissement est comprise entre 1 et 5 ppm et la quantité de phosphonate dans l'eau de refroidissement est comprise entre 3,75 et 9 ppm.

2. Procédé selon la revendication 1, dans lequel le chélatant est choisi parmi l'acide éthylènediaminetétraacétique et le nitrilotriacétate trisodique.

3. Procédé selon l'une des revendications 1 ou 2, dans lequel l'agent de contrôle des dépôts est choisi parmi l'acide hydroxyéthylènediphosphonique, l'acide phosphonobutane-1,2,3-tricarboxylique, l'acide aminotriméthylènephosphonique et l'acide diméthylènetriaminepentaméthylènephosphonique.
